# EUROPÄISCHE PATENTANMELDUNG

(11) **EP 0 863 049 A2**
(43) Veröffentlichungstag der Anmeldung: **09.09.1998**
(21) Anmeldenummer: 97111233.9
(22) Anmeldetag: 03.07.1997
(51) Int. Cl.: B60Q 1/46, B60Q 1/52

(54) **Elektrische Warnlichtschaltung für Kraftfahrzeuge**

(30) Priorität: 05.03.1997 DE 29703950 U
(71) Anmelder: Paech, Eberhard, 14195 Berlin (DE)
(72) Erfinder: Paech, Eberhard, 14195 Berlin (DE)
(74) Vertreter: Hoffmann, Klaus-Dieter, Dipl.-Ing.

(57) **Zusammenfassung**

Die Erfindung betrifft eine elektrische Warnlichtschaltung (1) für Kraftfahrzeuge, mit einem von Hand betätigbaren Schalter (2), in dessen Einschaltstellung mindestens vier Blinklichtlampen (4) des Kraftfahrzeugs gleichzeitig intervallmäßig eingeschaltet sind. Eine solche Schaltung soll bei jeder Einlegung des Schalthebels (6) des Fahrzeugs in den Rückwärtsgang (7) bei eingeschalteter Zündung in Funktion gesetzt werden. Hierzu ist eine mit der Warnlichtschaltung (1) elektrisch gekoppelte Schalteinrichtung vorgesehen, die in Einraststellung des Schalthebels (6) in den Rückwärtsgang (7) in Betriebsstellung ist und über die die Blinklichtlampen (4) ohne Einschaltung des von Hand betätigbaren Schalters (2) gleichzeitig intervallmäßig eingeschaltet sind.

## Beschreibung

Die Erfindung betrifft eine elektrische Warnlichtschaltung für Kraftfahrzeuge, mit einem von Hand betätigbaren Schalter, der in einem Stromkreis angeordnet ist, in dem mindestens vier von Hand einzeln einschaltbare Blinklichtlampen und diesen zugeordnete Schalttransistoren oder Schaltrelais' liegen,wobei in Einschaltstellung des Schalters die Blinklichtlampen gleichzeitig intervallmäßig eingeschaltet sind.

Kraftfahrzeuge sind herkömmlicherweise mit einer Warnlichtschaltung der oben genannten Art ausgerüstet, die bei Gefahrensituationen, bei Pannen, an Stauenden und ähnlichen Begebenheiten über den von Hand betätigbaren Schalter eingeschaltet wird, so daß die am Fahrzeug vorhandenen Blinklichtlampen gleichzeitig intervallmäßig aufleuchten, und zwar für gewöhnlich gelb/orange. Bei Lastkraftwagen sind zusätzlich an der ausklappbaren und absenkbaren Rückwand, die meist als Hebebühne ausgebildet ist, an deren Ober- bzw. Außenkante als Blinklichter dienende Positionslampen vorgesehen, die in den Stromkreis der elektrischen Warnlichtschaltung integriert sind und bei abgesenkter Rückwand / Hebebühne die verlängerte Standfläche des Fahrzeugs für die Verkehrsteilnehmer deutlich markieren.

Intervallmäßiges gleichzeitiges Aufleuchten des Warnlichtes bzw. der Blinklichtlampen eines Kraftfahrzeuges bringt den Vorteil mit sich, daß der intervallmäßige Lichteffekt von den Verkehrsteilnehmern auch bei nicht unmittelbarer Sicht auf das entsprechende Fahrzeug wahrnehmbar ist.

Die Erfindung geht von der Überlegung aus,diesen Vorteil für jede Rückwärtsfahrt eines Kraftfahrzeuges nutzbar zu machen, da die Unfallstatistiken belegen, daß insbesondere im Stadtverkehr beim Rückwärtsfahren aus z.B. Garageneinfahrten, Parklücken und dgl. verhältnismäßig häufig Unfälle auftreten, da für den fließenden Verkehr das rückwärtsfahrende Kraftfahrzeug häufig nicht unmittelbar sichtbar ist und die Signalwirkung des sich bei Einlegung des Rückwärtsganges des betreffenden Fahrzeug automatisch einschaltenden Rückscheinwerferlichtes des Fahrzeuges insbesondere bei Garagenausfahrten nicht zufriedenstellend ist.

Der Erfindung liegt daher die Aufgabe zugrunde, eine elektrische Warnlichtschaltung für Kraftfahrzeuge gemäß der eingangs erwähnten Art zur Verfügung zu stellen, die bei jeder Einlegung des Schalthebels des Kraftfahrzeuges in den Rückwärtsgang des Schaltgetriebes des Fahrzeuges bei eingeschalteter Zündung in Funktion gesetzt wird.

Diese Aufgabe wird erfindungsgemäß dadurch gelöst, daß eine mit der Warnlichtschaltung elektrisch gekoppelte Schalteinrichtung vorgesehen ist, die in Einraststellung des Kfz-Schalthebels in den Rückwärtsgang des Kfz - Getriebes bei eingeschalteter Kfz-Zündung in Betriebsstellung ist und über die die Blinklichtlampen in dem Stromkreis ohne Einschaltung des von Hand betätigbaren Schalters gleichzeitig intervallmäßig eingeschaltet sind.

Vorzugsweise ist die Schalteinrichtung zusätzlich mit dem Stromkreis für die Kfz-Rückscheinwerfer gekoppelt.

Die Schalteinrichtung kann elektromechanisch oder elektronisch ausgelegt sein.

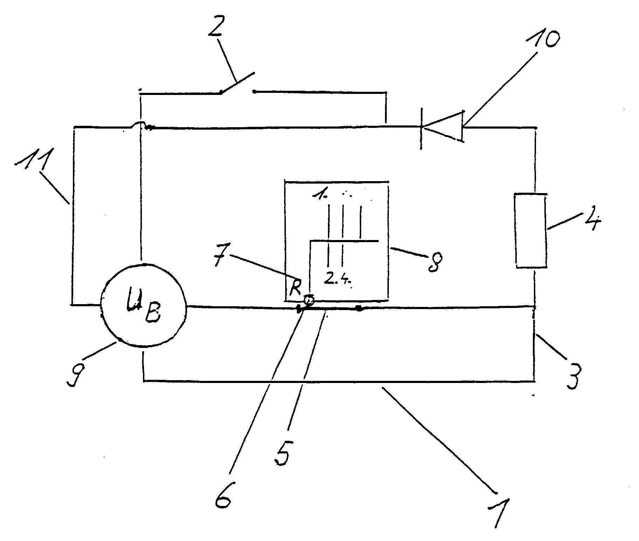

Anhand der einzigen Figur der Zeichnung, die schematisch ein Prinzipschaltbild der elektrischen Warnlichtschaltung zeigt, wird die Erfindung nun im Detail beschrieben. So ist in dem von der Kfz-Batterie 9 ausgehenden Stromkreis 3 der Warnlichtschaltung 1 ein von Hand betätigbarer Schalter 2 vorgesehen, bei dessen Einschaltung die einem Schalttransistor 10 nachgeschalteten, zueinander parallel geschalteten Blinklichtlampen 4 des Kraftfahrzeuges gleichzeitig intervallmäßig zum Leuchten gebracht werden können, wie es gewöhnlich im Falle einer Gefahrensituation zur Warnung anderer Verkehrsteilnehmer geschieht. Ferner ist bei jeder Einrastung des Kfz-Schalthebels 6 in den Rückwärtsgang R (7) des hier die Vorwärtsgänge 1. bis 5. aufweisenden Kfz- Getriebes 8 bei eingeschalteter Zündung der Stromschluß über eine von dem Schalthebel 6 automatisch eingeschaltete, in dem Stromkreis 11 integrierte Schalteinrichtung 5 zu dem Schalttransistor 5 und den diesem nachgeschalteten Blinklichtlampen 4 der Warnlichtschaltung 1 gegeben. Es ist somit gewährleistet, daß bei jedem Einlegen des Rückwärtsganganges 7 und jeder Rückwärtsbewegung des Fahrzeuges andere Verkehrsteilnehmer durch das periodisch aufleuchtende Warnlicht auf das sich rückwärtsbewegende Fahrzeug aufmerksam gemacht werden, auch wenn letzteres beim Rückwärtsfahren z. B. aus einer Garagenausfahrt oder einer Parklücke für die anderen Verkehrsteilnehmer nicht unmittelbar sichtbar ist. Durch die verhältnismäßig einfachen zusätzlichen Schaltmaßnahmen, die sich ohne großen Kostenaufwand bei herkömmlichen elektrischen Warnlichtschaltungen in Kraftfahrzeugen nachrüsten lassen, ist somit die Gewähr für eine erhöhte Verkehrssicherheit gegeben.

## Patentansprüche

1. Elektrische Warnlichtschaltung für Kraftfahrzeuge, mit einem von Hand betätigbaren Schalter, der in einem Stromkreis angeordnet ist,in dem mindestens vier von Hand einzeln einschaltbare Blinklichtlampen und diesen zugeordnete Schalttransistoren oder Schaltrelais' liegen, wobei in Einschaltstellung des Schalters die Blinklichtlampen gleichzeitig intervallmäßig eingeschaltet sind,
dadurch gekennzeichnet,
daß eine mit der Warnlichtschaltung (1) elektrisch gekoppelte Schalteinrichtung (5) vorgesehen ist, die in Einraststellung des Kfz-Schalthebels (6) in den Rückwärtsgang (7) des Kfz-Getriebes (8) bei eingeschalteter Kfz- Zündung in Betriebsstellung ist und über die die Blinklichtlampen (4) in dem Stromkreis (3;11) ohne Einschaltung des von Hand betätigbaren Schalters (2) gleichzeitig intervallmäßig eingeschaltet sind.

2. Elektrische Warnlichtschaltung nach Anspruch 1, dadurch gekennzeichnet, daß die Schalteinrichtung (5) zusätzlich mit dem Stromkreis für die Kfz-Rückscheinwerfer gekoppelt ist.

3. Elektrische Warnlichtschaltung nach Anspruch 1, dadurch gekennzeichnet, daß die Schalteinrichtung (5) elektromechanisch ausgelegt ist.

4. Elektrische Warnlichtschaltung nach Anspruch 1, dadurch gekennzeichnet, daß die Schalteinrichtung (5) elektronisch gestaltet ist.
